# DEMANDE DE BREVET EUROPEEN

(11) **EP 1 607 312 A1**
(43) Date de publication de la demande: **21.12.2005**
(21) Numéro de dépôt: 05291221.9
(22) Date de dépôt: 07.06.2005
(51) Int. Cl.: B62D 29/00, B62D 25/08

(54) **Elément structurel pour véhicule automobile et véhicule automobile équipé d'un tel élément**

(30) Priorité: 14.06.2004 FR 0406427
(71) Demandeur: Faurecia Bloc Avant, 92000 Nanterre (FR)
(72) Inventeur: Girolimetto, Yves, 25260 Etouvans (FR)
(74) Mandataire: Domenego, Bertrand

(57) **Abrégé**

Cet élément structurel pour véhicule automobile comprend un premier et un deuxième corps métalliques (5, 3) distincts et séparés, des régions de chevauchement (21, 33) du premier et du deuxième corps métalliques se recouvrant, et une pièce de renfort (7) en matière plastique surmoulée sur le premier et le deuxième corps métalliques (5, 3), la pièce de renfort comprenant au moins une partie de liaison des corps métalliques (5, 3). Selon un aspect de l'invention, les régions de chevauchement (33, 21) des premier et deuxième corps métalliques (5, 3) comprennent des reliefs complémentaires (39) emboîtés les uns dans les autres, au moins un desdits reliefs formant sur le premier corps métallique (5) un canal (39) recevant la partie de liaison et débouchant à la périphérie du premier corps (5) par au moins une extrémité débouchante pour permettre à la partie de liaison de recouvrir le deuxième corps métallique (3).

Application par exemple à la réalisation de faces avant de véhicule automobile.

## Description

La présente invention concerne le domaine des éléments structurels pour véhicule automobile et en particulier un élément structurel pour véhicule automobile du type comprenant :
- un premier et un deuxième corps métalliques distincts et séparés, des régions de chevauchement du premier et du deuxième corps métalliques se recouvrant, et
- une pièce de renfort en matière plastique surmoulée sur le premier et le deuxième corps métalliques, la pièce de renfort comprenant au moins une partie de liaison des corps métalliques.

L'invention s'applique en particulier à la réalisation de faces avant pour véhicule automobile. De telles faces avant sont qualifiées d'hybrides, du fait de l'utilisation combinée de métal et de matière plastique pour les réaliser.

Le document US 2003/0070387 décrit un élément structurel du type précité, dans lequel les parties de liaison sont des rivets, qui font partis de la pièce de renfort en matière plastique, et qui traversent des orifices ménagés dans les régions de chevauchement des corps métalliques.

Un but de l'invention est de fournir un élément structurel utilisant un autre mode de liaison des corps métalliques.

A cet effet, l'invention a pour objet un élément structurel du type précité caractérisé en ce que les régions de chevauchement des premier et deuxième corps métalliques comprennent des reliefs complémentaires emboîtés les uns dans les autres, au moins un desdits reliefs formant sur le premier corps métallique un canal recevant la partie de liaison et débouchant à la périphérie du premier corps métallique par au moins une extrémité débouchante pour permettre à la partie de liaison de recouvrir le deuxième corps métallique.

La partie de liaison reçue dans le canal sur le premier corps métallique est ainsi ancrée sur le premier corps métallique. La partie de liaison peut sortir par l'extrémité débouchante dudit canal et recouvrir le deuxième corps métallique de façon à maintenir les premier et deuxième corps métalliques l'un contre l'autre de façon satisfaisante.

Selon des modes particuliers de réalisation, l'élément structurel peut comprendre l'une ou plusieurs des caractéristiques suivantes, prise(s) isolément ou selon toutes les combinaisons techniquement possibles :
- une portion de la partie de liaison recouvrant le deuxième corps métallique s'étend entre deux extrémités débouchantes d'au moins un canal ;
- la région de chevauchement du premier corps métallique présente des reliefs formant une pluralité de canaux débouchant à la périphérie du premier corps métallique par des extrémités débouchantes ;
- les canaux communiquent les uns avec les autres ;
- une portion de la partie de liaison recouvrant le deuxième corps métallique constitue au moins une nervure de renfort.

L'invention concerne également un véhicule automobile comprenant un élément structurel tel que défini ci-dessus.

La présente invention et ses avantages seront mieux compris à l'étude de la description détaillée d'un mode de réalisation pris à titre d'exemple nullement limitatif, illustrée par les dessins annexés sur lesquels :
- la figure 1 est une vue schématique en perspective d'une face avant pour véhicule automobile selon l'invention,
- la figure 2 est une vue schématique en perspective de la traverse métallique supérieure de la face avant de la figure 1,
- la figure 3 est une vue schématique, en perspective, partielle et agrandie de la traverse métallique supérieure et d'un montant de la face avant de la figure 1, avant leur assemblage,
- la figure 4 est une vue analogue à la figure 3 montrant la traverse métallique supérieure et le montant métallique assemblés, avec la pièce de renfort en matière plastique surmoulée, et
- la figure 5 est une vue en perspective analogue à la figure 4, sous un autre angle de vue.

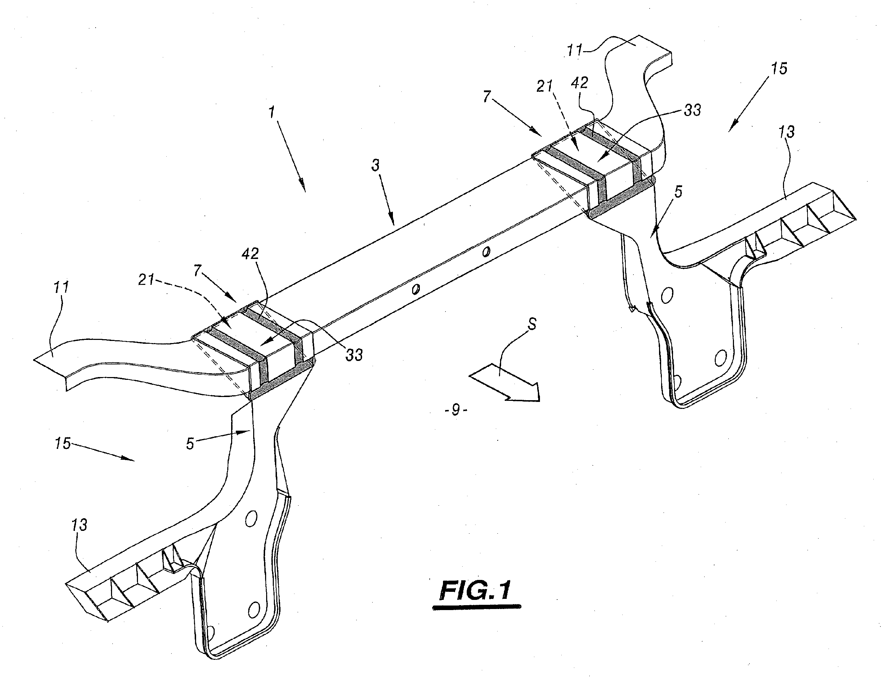

Dans tout ce qui suit, les orientations utilisées sont des orientations habituelles d'un véhicule automobile. Ainsi, les termes « avant », « arrière », « droite », « gauche », « supérieur » et « inférieur » s'entendent par rapport à la position d'un conducteur et au sens de marche du véhicule, matérialisé par une flèche S sur la figure 1.

La figure 1 représente une face avant 1 qui comprend une traverse métallique supérieure 3 qui s'étend sensiblement horizontalement et deux montants latéraux métalliques 5 qui s'étendent sensiblement verticalement. Les deux montants latéraux 5 sont espacés latéralement l'un de l'autre et prolongent la traverse supérieure 3 vers le bas.

La face avant 1 comprend en outre une pièce de renfort 7 en matière plastique surmoulée sur la traverse 3 et les montants 5.

Une telle face avant 1 est destinée à être montée à l'avant d'un véhicule automobile pour supporter divers équipements tels que des blocs optiques, un groupe moto-ventilateur (GMV), un radiateur, un condenseur...

Ainsi, les montants 5 délimitent entres eux un espace central 9 de réception par exemple d'un radiateur, d'un condenseur et d'un groupe moto-ventilateur.

De même, les extrémités latérales 11 de la traverse 3 délimitent, avec des branches 13 prolongeant les montants 5 latéralement vers l'extérieur, des espaces 15 de réception de blocs optiques.

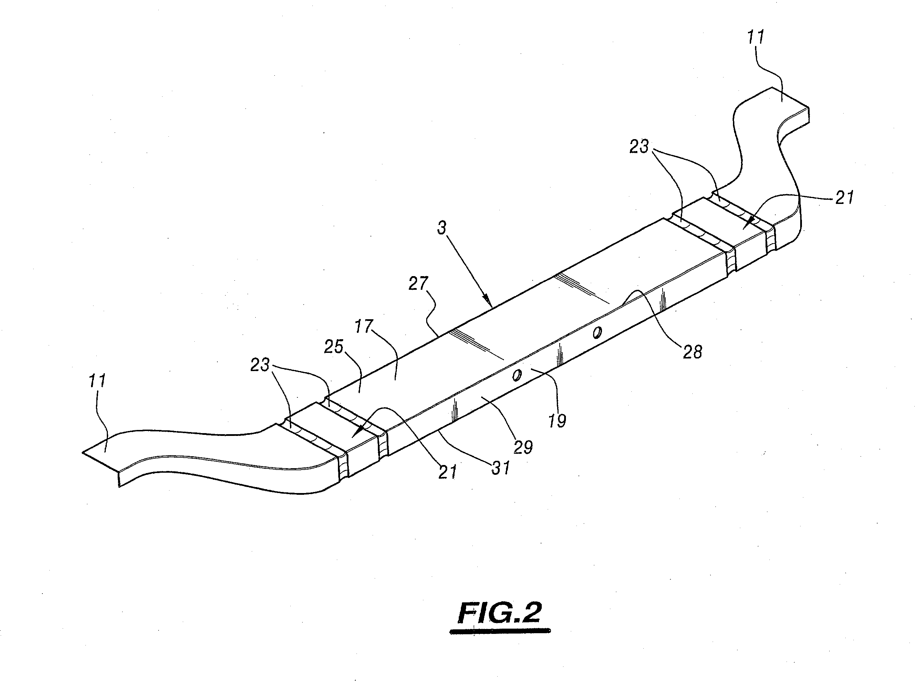

Comme on peut mieux le voir sur la figure 2, la traverse 3 est un profilé de section verticale sensiblement en L inversé avec une aile supérieure 17 sensiblement horizontale, prolongée à partir d'un bord avant 28 vers le bas par une aile avant 19.

La traverse supérieure 3 comprend deux régions 21 de chevauchement avec les montants 5. Ces régions 21 sont espacées l'une de l'autre ainsi que des extrémités latérales 11. La traverse 3 présente, au-delà de ces régions 21, des décrochements vers l'arrière terminés par les extrémités latérales 11.

Chaque région de chevauchement 21 est munie de reliefs permettant l'emboîtement avec le montant 5. Les reliefs se présentent par exemple sous la forme de gorges longitudinales parallèles 23. Chaque région de chevauchement 21 de la traverse 3 comprend dans l'exemple représenté deux gorges parallèles 23.

Chaque gorge 23 est formée en creux sur la surface supérieure 25 de l'aile supérieure 17 de la traverse 3 et s'étend depuis un bord arrière 27 de l'aile supérieure 17 où la gorge 23 débouche, jusqu'au bord avant 28 à partir duquel la gorge 23 se prolonge vers le bas en creux sur la surface avant 29 de l'aile avant 19. La gorge 23 débouche sur un bord inférieur 31 libre de l'aile avant 19.

Les montants 5 ont des formes sensiblement symétriques l'une de l'autre par rapport à un plan vertical médian de la face avant 1. Seule la structure du montant 5 droit (à gauche sur la figure 1) ainsi que sa liaison avec la traverse 3 seront donc décrites par la suite.

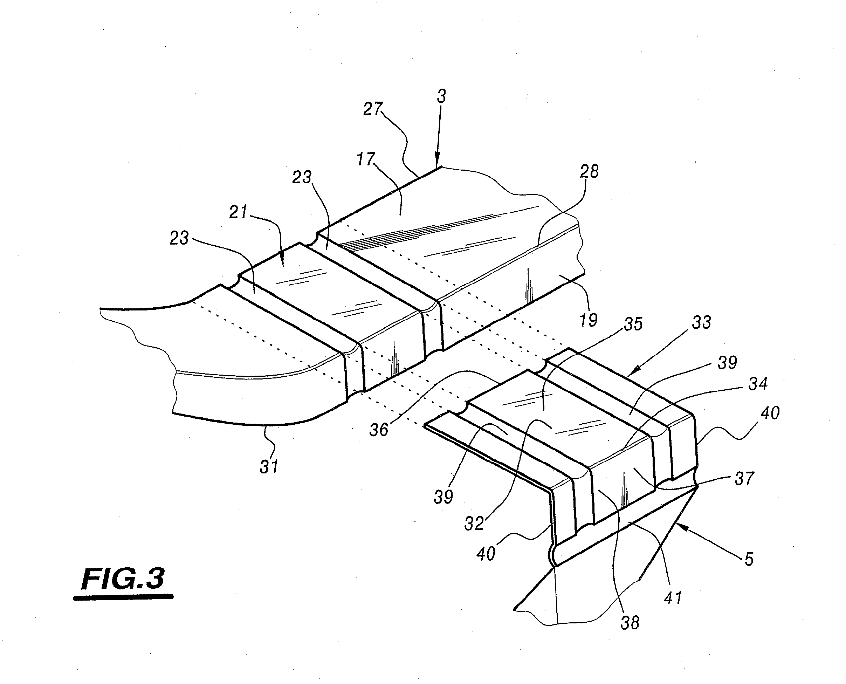

Comme illustré par la figure 3, l'extrémité supérieure du montant 5 forme une région de chevauchement 33 destinée à recouvrir la région de chevauchement 21 droite de la traverse 3. Cette région de chevauchement 33 du montant 5 présente une section verticale sensiblement en L inversé avec une aile supérieure 35 sensiblement horizontale prolongée à partir d'un bord avant 34 par une aile avant 37 s'étendant vers le bas. Cette section correspond sensiblement à celle de la traverse 3, de façon que la région de chevauchement 33 du montant 5 peut recouvrir la région de chevauchement 21 de la traverse 3 en épousant sa forme.

La région de chevauchement 33 du montant 5 présente des reliefs complémentaires avec ceux de la région de chevauchement 21 droite de la traverse 3 pour permettre leur emboîtement. Les reliefs se présentent par exemple sous la forme de canaux longitudinaux 39 formés en creux sur une surface supérieure 32 de l'aile supérieure 35 et une surface avant 38 de la région de chevauchement 33. Les canaux 39 s'étendent depuis un bord libre arrière 36 de l'aile supérieure 35, jusqu'au bord avant 34, et se prolongent verticalement vers le bas sur l'aile avant 37. Les canaux 39 débouchent sur le bord arrière 36 de l'aile supérieure 35. Les canaux 39 forment des nervures en saillies sur les surfaces opposées, c'est-à-dire les surfaces intérieures de la région de chevauchement 33 (non visibles sur la figure 3) destinées à venir en contact avec la région de chevauchement 21 de la traverse 3.

L'espacement latéral entre les canaux 39 est égal à l'espacement latéral entre les gorges 23 de la traverse 3. Lorsque la région de chevauchement 33 du montant 5 est placée sur la région de chevauchement 21 droite de la traverse 3, les canaux 39 viennent s'emboîter dans les gorges 23 de la traverse 3.

La région de chevauchement 33 du montant 5 est munie sur l'aile avant 37 d'un relief supplémentaire formant sur la surface avant 38 un canal transversal 41 s'étendant transversalement et débouchant à la périphérie du montant 5, sur les bords latéraux 40 de l'aile avant 37. La distance entre le bord avant 34 de l'aile supérieure 35 de la région de chevauchement 33 du montant 5 et le canal transversal 41 est sensiblement égale à la hauteur de l'aile avant 19 de la traverse 3, c'est-à-dire sensiblement égale à la distance entre le bords avant 28 de l'aile supérieure 17 de la région de chevauchement 21 droite de la traverse 3 et le bord inférieur 31 de l'aile avant 19 de la traverse 3. Les portions verticales des canaux 39 formées sur l'aile avant 37 du montant 5 débouchent dans le canal transversal 41. Les canaux longitudinaux 39 et le canal transversal 41 forment un réseau de canaux en communication débouchant à la périphérie du montant 5.

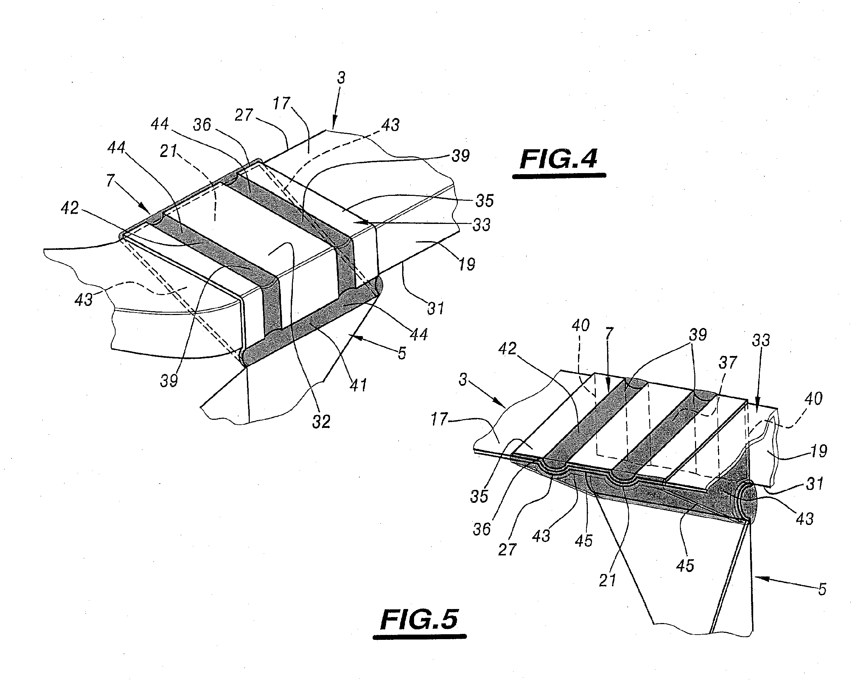

Sur la figure 4, le montant 5 est représenté en position assemblée sur la traverse 3, dans laquelle les canaux 39 formés sur la région de chevauchement 33 du montant 5 sont emboîtés dans les gorges 23 formées sur la région de chevauchement 21 droite de la traverse 3.

L'aile supérieure 35 de la région de chevauchement 33 du montant 5 présente une longueur sensiblement égale à celle de l'aile supérieure 17 de la traverse 3, de sorte que leurs bords libres arrières 36, 27 sont sensiblement alignés. Le canal transversal 41 du montant 5 se situe en dessous du bord libre inférieur 31 de l'aile avant 19 de la traverse 3, au droit de ce dernier.

Dans cette position, le montant 5 et la traverse 3 sont maintenus l'un par rapport à l'autre par leurs reliefs emboîtés. Un déplacement latéral du montant 5 relativement à la traverse 3 est empêché par les canaux 39 qui s'emboîtent dans les gorges 23 (non visibles sur la figure 4) formées sur la traverse 3. En outre, le canal transversal 41 du montant 5 forme sur la surface intérieure du montant 5 une saillie venant interférer avec le bord libre inférieur 31 de l'aile avant 19 de la traverse 3, et permettant sensiblement le maintien vertical du montant 5 relativement à la traverse 3.

En revenant à la figure 1, la pièce de renfort 7, représentée en grisé, comprend des parties de liaison 42, ici au nombre de deux. Chaque partie de liaison 42 est surmoulée sur une région de chevauchement 33 d'un montant 5 et une région de chevauchement 21 de la traverse 3 emboîtées, afin de les lier. Les parties de liaison 42 sont réalisées de façon sensiblement similaire sur chacune des jonctions entre les montants 5 et la traverse 3.

Seule la partie de liaison 42 du montant 5 droit (à gauche sur la figure 1), est décrite en détail par la suite, en référence aux figures 4 et 5.

La partie de liaison 42 comprend des cordons de matière 44 reçus dans les canaux 39, 41 formés sur les surfaces supérieure 32 et avant 38 de la région de chevauchement 33 du montant 5. Les cordons 44 sortent aux extrémités des canaux 39, 41 débouchant à la périphérie du montant 5, plus précisément aux extrémités arrières des canaux longitudinaux 39 et aux extrémités latérales du canal transversal 41. Aux extrémités des canaux 39, 41, la partie de liaison 42 contourne les bords du montant 5 en revenant vers l'intérieur pour venir recouvrir la traverse 3, plus particulièrement la surface intérieure de la traverse 3 située du côté opposé à la région de chevauchement 33 du montant 5.

Comme on peut mieux le voir sur la figure 5, la partie de liaison 42 enveloppe les bords arrière 27, 36 des ailes supérieures 17, 35 de la traverse 3 et du montant 5. Cet enveloppement permet de maintenir le montant 5 et la traverse 3 emboîtés, ce qui participe en particulier au maintien vertical du montant 5 sur la traverse 3. La partie de liaison 42 peut être configurée pour recouvrir entièrement ou partiellement la surface intérieure de la région de chevauchement 21 de la traverse 3.

La partie de liaison 42 recouvre la surface intérieure de la région de chevauchement 21 de la traverse 3 en formant des nervures de renfort 43, ici au nombre de deux. Les nervures 43 sont parallèles et situées aux extrémités latérales de la partie de liaison 42. Chaque nervure 43 est située dans un plan perpendiculaire aux ailes supérieure 17 et avant 19 de la traverse 3, et passant par un bord latéral 40 de l'aile avant 37 de la région de recouvrement 33 du montant 5.

Chaque nervure 43 présente un profil sensiblement triangulaire, des arêtes supérieures et avant longeant les surfaces intérieures des ailes supérieures 17 et avant 19 de la traverse 3, et une arête oblique 45 s'étendant sensiblement entre le bord arrière 27 de l'aile supérieure 17 de la traverse 3, et le bord inférieur 31 de l'aile avant 19 de la traverse 3.

Chaque nervure de renfort 43 prolonge un cordon de matière plastique issu d'une extrémité latérale du canal transversal 41 et rejoint un cordon de matière issu du canal longitudinal 39 situé latéralement du même côté. La matière plastique entoure ainsi les régions de chevauchement 21, 33 emboîtées, ce qui permet d'obtenir un maintien amélioré du montant 5 sur la travers 3.

La pièce de renfort 7 peut comprendre d'autres nervures de renfort non représentées recouvrant des surfaces de la traverse 3 et des montants 5.

La pièce de renfort 7 comprend donc une partie de liaison 42 efficacement ancrée sur le montant 5 en étant reçu dans des canaux 39, 41, et quittant les canaux 39, 41 par des extrémités débouchant à la périphérie du montant 5 en venant recouvrir la traverse 3 du côté opposé au montant 5, assurant aussi le maintien de la traverse 3 et du montant 5.

Les nervures 43 contribuent à la rigidité de l'ensemble et améliorent en outre la liaison de la traverse 3 et du montant 5 en formant des portions recouvrant la traverse 3 du côté opposé au montant 5, en reliant en outre des cordons de matière issus des extrémités des canaux 39, 41 débouchant à la périphérie du montant 5.

Les gorges et les canaux 39, 41 des régions de chevauchement 21, 33 de la traverse 3 et du montant 5 peuvent par exemple être formés par emboutissage.

L'invention n'est pas limitée au mode de réalisation divulgué. En particulier, on pourrait prévoir d'autres profils de canaux, ou des corps métalliques (traverse, montants) présentant des sections différentes.

L'invention peut s'appliquer à la réalisation d'un élément structurel de véhicule automobile autre que des faces avant.

## Revendications

1. Elément structurel pour véhicule automobile du type comprenant :
- un premier et un deuxième corps métalliques (5, 3) distincts et séparés, des régions de chevauchement (21, 33) du premier et du deuxième corps métalliques se recouvrant, et
- une pièce de renfort (7) en matière plastique surmoulée sur le premier et le deuxième corps métalliques (5, 3), la pièce de renfort comprenant au moins une partie de liaison (42) des corps métalliques (5, 3),
**caractérisé en ce que** les régions de chevauchement (33, 21) des premier et deuxième corps métalliques (5, 3) comprennent des reliefs complémentaires (23, 39) emboîtés les uns dans les autres, au moins un desdits reliefs formant sur le premier corps métallique (5) un canal (39) recevant la partie de liaison et débouchant à la périphérie du premier corps métallique (5) par au moins une extrémité débouchante pour permettre à la partie de liaison (42) de recouvrir le deuxième corps métallique (3).

2. Elément structurel selon la revendication 1, **caractérisé en ce qu'**une portion (43) de la partie de liaison recouvrant le deuxième corps métallique (3) s'étend entre deux extrémités débouchantes d'au moins un canal (39, 41).

3. Elément structurel selon l'une des revendications 1 ou 2, **caractérisé en ce que** la région de chevauchement (33) du premier corps métallique (5) présente des reliefs formant une pluralité de canaux (39, 41) débouchant à la périphérie du premier corps métallique (5) par des extrémités débouchantes.

4. Elément structurel selon la revendication 3, **caractérisé en ce que** les canaux (39, 41) communiquent les uns avec les autres.

5. Elément structurel selon l'une des revendications précédentes, **caractérisé en ce qu'**une portion de la partie de liaison recouvrant le deuxième corps métallique (3) constitue au moins une nervure de renfort (43).

6. Véhicule automobile comprenant un élément structurel selon l'une quelconque des revendications précédentes.
